# EUROPEAN PATENT SPECIFICATION

(11) **EP 3 980 285 B1**
(45) Date of publication and mention of the grant of the patent: **09.12.2026**
(21) Application number: 20747493.3
(22) Date of filing: 04.06.2020
(51) Int. Cl.: B60K 1/04, H01M 10/6554, H01M 10/653, H01M 50/249, H01M 50/209

(54) **SYSTEM COMPRISING A POWER SUPPLY ASSEMBLY AND A VEHICLE FRAME ASSEMBLY**
SYSTEM MIT EINER STROMVERSORGUNGSANORDNUNG UND EINER FAHRZEUGRAHMENANORDNUNG
SYSTÈME COMPRENANT UN ENSEMBLE D'ALIMENTATION ÉLECTRIQUE ET UN ENSEMBLE CADRE DE VÉHICULE

(30) Priority: 05.06.2019 US 201962857690 P
(43) Date of publication of application: 13.04.2022
(73) Proprietor: AVL Mobility Technologies, Inc., Plymouth, MI 48170 (US)
(72) Inventor: FALLS, Bruce, Dove Canyon, California 92679 (US); QUINTANA, Adrian, Foothill Ranch, California 92610 (US)
(74) Representative: Wallin, Nicholas James
(86) International application number: PCT/US2020/036036
(87) International publication number: WO 2020/247573

(56) References cited:
- WO-A1-2011/061571
- US-A- 4 522 898
- US-A- 5 392 873
- US-A1- 2018 345 778

## Description

### CROSS REFERENCE TO RELATED APPLICATION

This PCT International Application Claims priority to U.S. Provisional Patent Application Serial Number 62/857,690 filed June 5, 2019.

### FIELD

The present invention relates to a system comprising a vehicle frame assembly and a power supply assembly.

### BACKGROUND

Conventional vehicle frames often include two or more side members extending along a length of the vehicle, and two or more cross members extending between the side members and along a width of the vehicle. The side members and cross members are often formed from steel, or another suitably strong and durable material, to support, and provide protection for, the vehicle's components and occupants. For example, the side members or cross members may be constructed from a material that exhibits sufficient strength and durability to support a power supply, such as a battery or a battery pack assembly. In this regard, a conventional vehicle frame often includes one or more brackets coupled to the side members or the cross members for attaching a battery pack or other vehicle component to the frame assembly. Often, the manner of assembling the various components to the vehicle frame may not provide the desired level of support and protection for each of the components. Accordingly, while known vehicle frame assemblies have proven suitable for their intended purposes, there remains a need for improvement in the pertinent art.

US 5392873A describes a structure for securing a plurality of batteries used for an electric vehicle. The battery securing structure includes an inner spacer member having a lower inner spacer member and an upper inner spacer member, each of which is made of a synthetic resin such as polypropylene (PP). The lower inner spacer member has partition portions divided into separate compartments to fixedly dispose each battery in a compartment whereby all the batteries are in a state in which they have been separated from each other on all sides. The upper inner spacer member includes pressing portions for pressing and holding desired portions of the batteries, concave portions for defining spaces used for conductive wires and cooling, and partition portions divided into compartments to unmovably dispose the batteries in a state in which they have been spaced away from each other.

### SUMMARY

According to the invention, there is provided a system as set out in claim 1. Optional features are set out in the dependent claims.

Further areas of applicability will become apparent from the description provided herein. The description and specific examples in this summary are intended for purposes of illustration only and are not intended to limit the scope of the present invention, which is defined only by the appended claims.

### DRAWINGS

The drawings described herein are for illustrative purposes only of selected configurations and not all possible implementations, and are not intended to limit the scope of the present invention, which is defined only by the appended claims.
FIG. 1 is a perspective view of a vehicle including a vehicle frame assembly in accordance with the principles of the present disclosure;
FIG. 2 is an exploded view of the vehicle frame assembly of FIG. 1;
FIG. 3 is a bottom perspective view of the vehicle frame assembly of FIG. 1;
FIG. 4 is a top perspective view of the vehicle frame assembly of FIG. 1;
FIG. 5 is a cross-sectional view of the vehicle frame assembly of FIG. 1 taken along the line 5-5 of FIG. 4; and
FIG. 6 is a cross-sectional view of the vehicle frame assembly of FIG. 1 taken along the line 6-6 of FIG. 4.

Corresponding reference numerals indicate corresponding parts throughout the drawings.

### DETAILED DESCRIPTION

Example configurations will now be described more fully with reference to the accompanying drawings. Specific details are set forth such as examples of specific components, devices, and methods, to provide a thorough understanding of configurations of the present disclosure. It will be apparent to those of ordinary skill in the art that specific details need not be employed, that example configurations may be embodied in many different forms, and that the specific details and the example configurations should not be construed to limit the scope of the invention, that is limited only by the scope of the appended claims.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

When an element or layer is referred to as being "on," "engaged to," "connected to," "attached to," or "coupled to" another element or layer, it may be directly on, engaged, connected, attached, or coupled to the other element or layer, or intervening elements or layers may be present. In contrast, when an element is referred to as being "directly on," "directly engaged to," "directly connected to," "directly attached to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

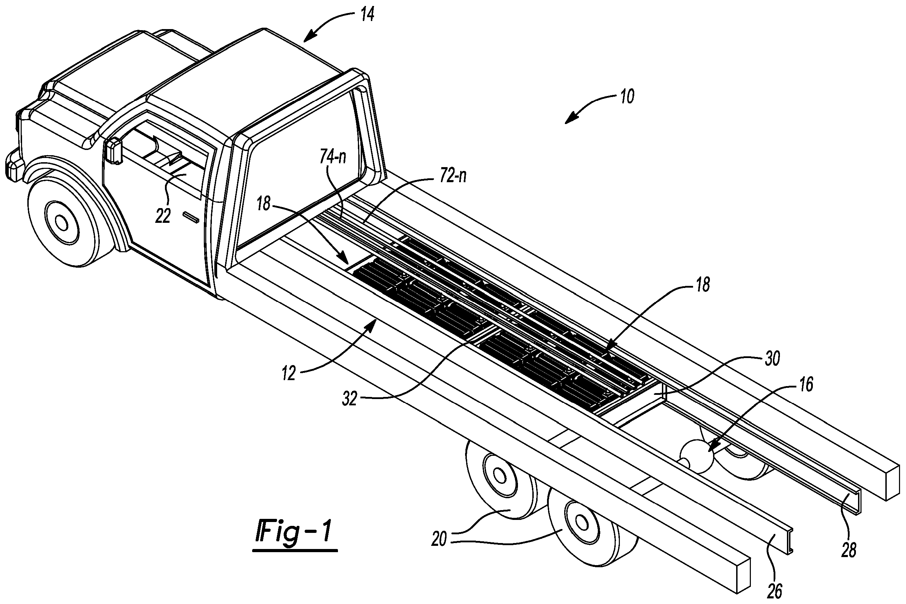

Referring to FIG. 1, a vehicle 10 is illustrated and includes a frame assembly 12, a body 14, a motor 16, one or more power supply assemblies 18, and a plurality of wheels 20. While the vehicle 10 is generally illustrated as being a commercial utility vehicle, it will be appreciated that the vehicle 10 may include other types of vehicles (e.g., passenger car, van, truck, etc.) within the scope of the present disclosure. In this regard, the frame assembly 12 may be coupled to, or otherwise support, the body 14, the motor 16, the power supply assembly 18, and/or the wheels 20, while the body 14 may define a passenger compartment 22 for housing one or more occupants or users of the vehicle 10.

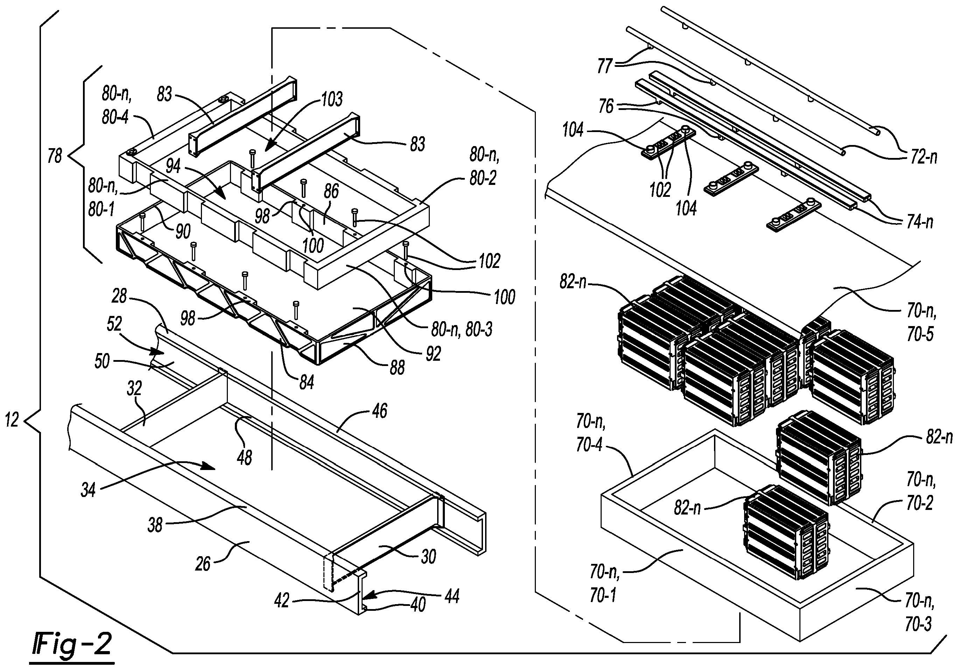

As illustrated in FIGS. 2-4, the frame assembly 12 may include a first longitudinal member 26, a second longitudinal member 28, a first cross member 30, and a second cross member 32. While the frame assembly 12 is generally shown and described herein as including two longitudinal members 26, 28 and two cross members 30, 32, it will be appreciated that the frame assembly 12 may include more than two longitudinal members or more than two cross members within the scope of the present disclosure. In some implementations, the first cross member 30 and the second cross member 32 extend from the first longitudinal member 26 to the second longitudinal member 28, such that the first and second cross members 30, 32 and the first and second longitudinal members 26, 28 collectively define a void 34 therebetween. In some implementations, at least a portion of the first longitudinal member 26 extends in a direction substantially parallel to the second longitudinal member 28, and at least a portion of the first cross member 30 extends in a direction substantially parallel to the second cross member 32, such that the void 34 defines a substantially rectangular shape.

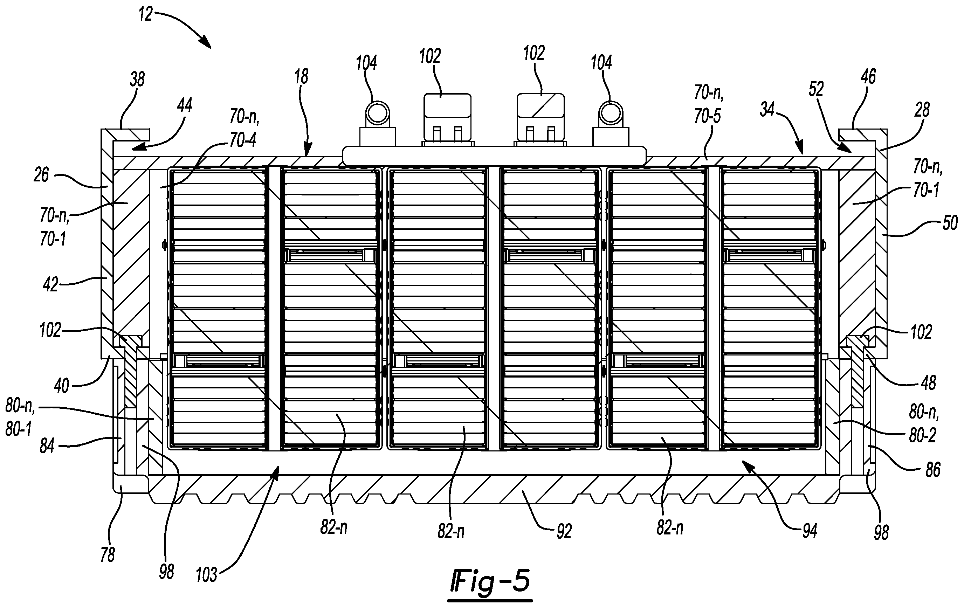

With reference to at least FIG. 5, the first longitudinal member 26 may include a first upper wall 38, a first lower wall 40, and a first side wall 42 extending from the first upper wall 38 to the first lower wall 40. In some implementations, the first upper wall 38 is substantially parallel to the first lower wall 40, while the first side wall 42 is substantially perpendicular to the first upper wall 38 or the first lower wall 40, such that the first upper, lower, and side walls 38, 40, 42 collectively define a U- or C-shaped cross section including a first channel 44 therebetween. The first channel 44 may face, or otherwise be in fluid communication with, the void 34.

The second longitudinal member 28 may include a second upper wall 46, a second lower wall 48, and a second side wall 50 extending from the second upper wall 46 to the second lower wall 48. In some implementations, the second upper wall 46 is substantially parallel to the second lower wall 48, while the second side wall 50 is substantially perpendicular to the second upper wall 46 or the second lower wall 48, such that the second upper, lower, and side walls 46, 48, 50 collectively define a U- or C-shaped cross section including a second channel 52 therebetween. The second channel 52 may face, or otherwise be in fluid communication with, the void 34.

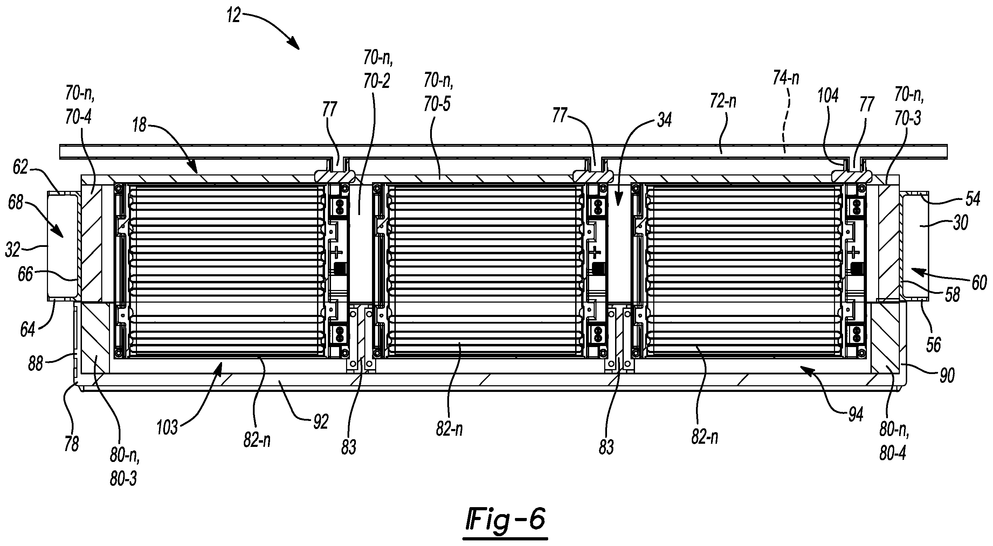

With reference to at least FIG. 6, the first cross member 30 may include a third upper wall 54, a third lower wall 56, and a third side wall 58 extending from the third upper wall 54 to the third lower wall 56. In some implementations, the third upper wall 54 is substantially parallel to the third lower wall 56, while the third side wall 58 is substantially perpendicular to the third upper wall 54 or the third lower wall 56, such that the third upper, lower, and side walls 54, 56, 58 collectively define a U- or C-shaped cross section including a third channel 60 therebetween. The third upper and lower walls 54, 56 may extend in a direction away from the void 34, such that the third channel 60 and the void 34 are disposed on opposite sides of the third side wall 58.

The second cross member 32 may include a fourth upper wall 62, a fourth lower wall 64, and a fourth side wall 66 extending from the fourth upper wall 62 to the fourth lower wall 64. In some implementations, the fourth upper wall 62 is substantially parallel to the fourth lower wall 64, while the fourth side wall 66 is substantially perpendicular to the fourth upper wall 62 or the fourth lower wall 64, such that the fourth upper, lower, and side walls 62, 64, 66 collectively define a U- or C-shaped cross section including a fourth channel 68 therebetween. The fourth upper and lower walls 62, 64 may extend in a direction away from the void 34, such that the fourth channel 68 and the void 34 are disposed on opposite sides of the fourth side wall 66.

As illustrated in FIGS. 2-6, in some implementations the frame assembly 12 includes a plurality of insulation members 70-n. For example, the frame assembly 12 may include first and second insulation members 70-1, 70-2 supported by the first and second longitudinal members 26, 28, respectively, third and fourth insulation members 70-3, 70-4 supported by the first and second cross members 30, 32, and a fifth insulation member 70-5 supported by one or more of the first or second cross members 30, 32 or the first or second longitudinal members 26, 28. The first and second insulation members 70-1, 70-2 may be disposed within first and second channels 44, 52, respectively, while the third and fourth insulation members 70-3, 70-4 may be disposed on the first and second cross members 30, 32 opposite the third and fourth channels 60, 68 such that the first, second, third, and fourth insulation members 70-1, 70-2, 70-3, 70-4 substantially surround the void 34. The fifth insulation member 70-5 may traverse the void 34 and extend from the first cross member 30 to the second cross member 32 and from the first longitudinal member 26 to the second longitudinal member 28.

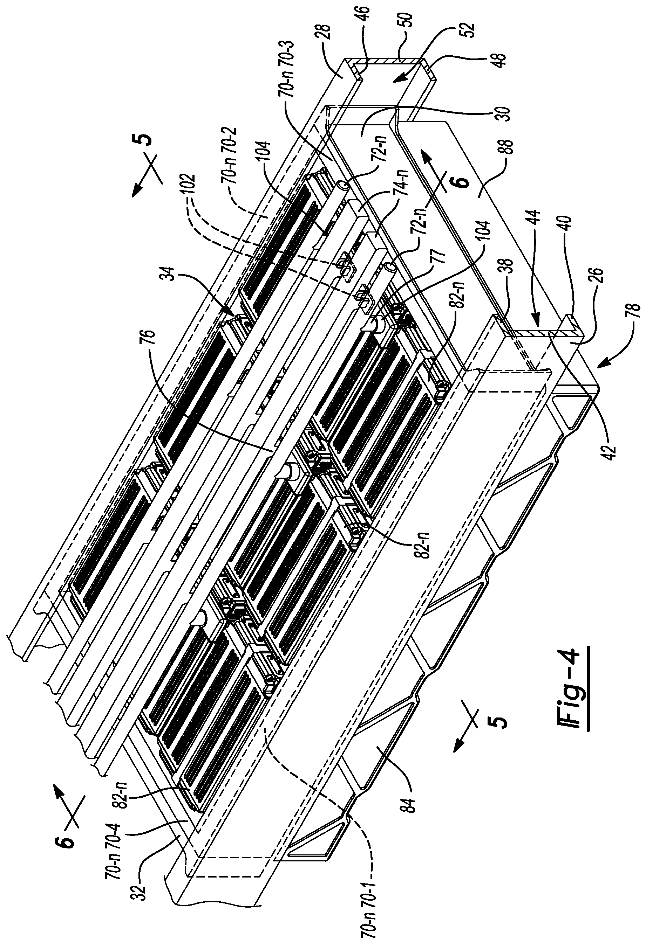

With reference to FIGS. 2 and 4-6, the frame assembly 12 includes a plurality of cooling conduits 72-n and a plurality of busbars 74-n. For example, as illustrated in FIG. 4, the cooling members 72-n and the busbars 74-n may extend in a direction substantially parallel to the first and second longitudinal members 26, 28, and from the first cross member 30 to the second cross member 32, such that the cooling members 72-n and the busbars 74-n traverse the void 34. In some implementations, each busbar 74-n includes a plurality of connectors 76 for coupling each busbar 74-n to a power supply assembly 18 for electrical communication therewith. Similarly, each cooling member 72-n may include a plurality of connectors 77 (e.g., inlets or outlets) for coupling each cooling member 72-n to a power supply assembly 18 for fluid communication therewith.

As illustrated in FIGS. 2-6, the power supply assembly 18 includes a tray 78 and may include a plurality of insulation members 80-n, a plurality of batteries 82-n, and one or more dividers 83. The tray 78 may include a first longitudinal wall 84, a second longitudinal wall 86, a first lateral wall 88 extending from the first longitudinal wall 84 to the second longitudinal wall 86, a second lateral wall 90 extending from the first longitudinal wall 84 to the second longitudinal wall 86, and a bottom wall 92 extending from the first longitudinal wall 84 to the second longitudinal wall 86 and from the first lateral wall 88 to the second lateral wall 90. In some implementations, the first longitudinal wall 84 is substantially parallel to the second longitudinal wall 86, and the first lateral wall 88 is substantially parallel to the second lateral wall 90, such that the first and second longitudinal walls 84, 86 and the first and second lateral walls 88, 90 define a substantially rectangular shape, and the first and second longitudinal walls 84, 86, the first and second lateral walls 88, 90, and the bottom wall 92 collectively define a chamber 94.

With reference to FIGS. 2 and 5, one or more of the first or second longitudinal walls 84, 86 or the first or second lateral walls 88, 90 may include flange 98. As illustrated, in some implementations the flange(s) 98 extend inwardly from an upper end of the first and second longitudinal walls 84, 86. In this regard, the one or more flange 98 coupled to an upper end of the first longitudinal wall 84 may extend toward the second longitudinal wall 86, while the one or more flange 98 coupled to an upper end of the second longitudinal wall 86 may extend toward the first longitudinal wall 84, such that the flange(s) 98 coupled to the first longitudinal wall 84 are substantially parallel to, and coplanar with, the flange(s) 98 coupled to the second longitudinal wall 86. In some implementations, one or more of the flange(s) 98 may include one or more apertures 100 for receiving a fastener 102 (e.g., rivet, bolt, screw, etc.).

As illustrated in at least FIGS. 2, 5, and 6, the plurality of insulation members 80-n may include first and second insulation members 80-1, 80-2 supported by the first and second longitudinal walls 84, 86, respectively, and third and fourth insulation members 80-3, 80-4 supported by the first and second lateral walls 88, 90. The first, second, third, and fourth insulation members 80-1, 80-2, 80-3, 80-4 may be disposed within the chamber 94 such that the first, second, third, and fourth insulation members 80-1, 80-2, 80-3, 80-4 substantially define at least one chamber 103 within the chamber 94 of the tray 78.

Each battery 82-n at least two electrical connectors 102 and at least two fluid connectors 104. As illustrated in FIG. 4, each battery 82-n includes two electrical connectors 102 ( a positive terminal and a negative terminal) and two fluid connectors 104 ( an inlet and an outlet).

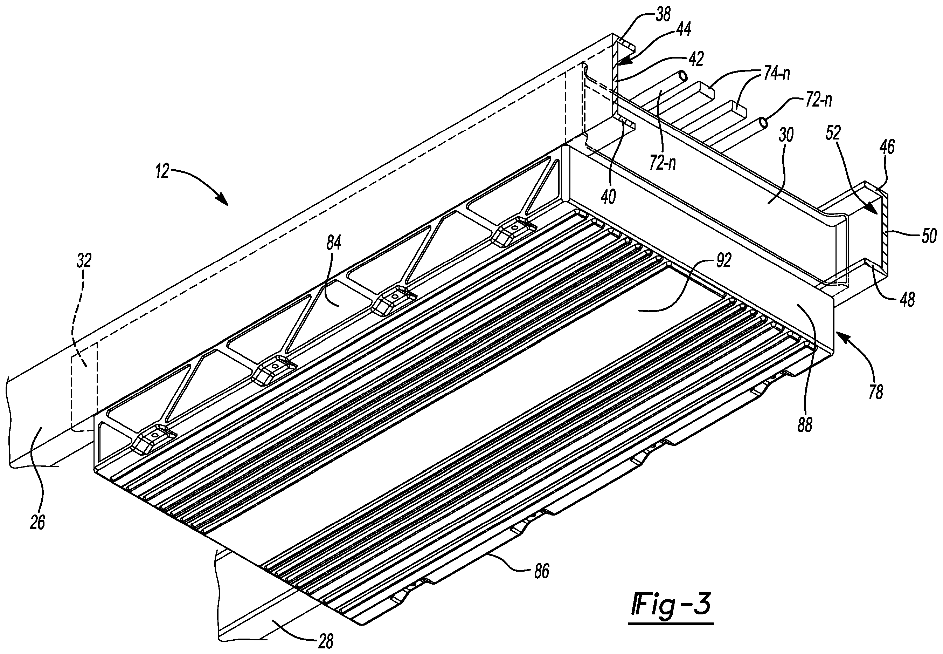

As illustrated in FIGS. 3-6, in an assembled configuration, the batteries 82-n may be disposed within the chamber 103 such that the first, second, third, and fourth insulation members 80-1, 80-2, 80-3, 80-4 substantially surround at least a portion of each battery 82-n. In some implementations, the dividers 83 are disposed between one or more of the batteries 82-n. For example, each divider 83 may be disposed between at least two of the batteries 82-n and extend between the first and second insulation members 80-1, 80-2. In particular, the dividers 83 may extend from the first insulation member 80-1 to the second insulation member 80-2. The power supply assembly 18 may be assembled relative to the frame assembly 12 such that the plurality of batteries 82-n are disposed within the void 34. In this regard, in the assembled configuration, at least a portion of the batteries 82-n may be disposed between the first and second cross members 30, 32 and the first and second longitudinal members 26, 28, such that the insulation members 70-n collectively surround at least a portion of each of the plurality of batteries 82-n.

In some implementations, the power supply assembly 18 is coupled to the frame assembly 12 such that a first portion (e.g., a lower portion) of the batteries 82-n is surrounded by the tray 78 and a second portion (e.g., an upper portion) of the batteries 82-n is surrounded by the frame assembly 12. For example, the first and second longitudinal walls 84, 86 of the tray 78 may be coupled to the first and second longitudinal members 26, 28, respectively, and the first and second lateral walls 88, 90 may be coupled to the first and second cross members 30, 32, respectively. In particular, the flange(s) 98 may be coupled to the first, second, third, or fourth lower walls 40, 48, 56, 66 of the first or second longitudinal members 26, 28 or the first or second cross members 30, 32, respectively, with a bolt, rivet, screw, or other suitable fastening mechanism, such that the insulation members 70-n, 80-n collectively surround the batteries 82-n. In this assembled configuration, the batteries 82-n may be coupled to the cooling members 72-n and/or the busbars 74-n to transfer heat or electricity, respectively, from the batteries 82-n. For example, one of the connectors 102 (e.g., a positive terminal) of one or more of the batteries 82-n may be coupled to one of the connectors 76 of a first busbar 72-1, while another of the connectors 102 (e.g., a negative terminal) of one or more of the batteries 82-n may be coupled to one of the connectors 76 of a second busbar 72-2 to transfer electricity from the batteries 82-n to another component of the vehicle 10. Similarly, one of the connectors 77 (e.g., an inlet) of a first cooling member 72-n may be coupled one of the connectors 104 (e.g., an outlet) of a battery 82-n, while one of the connectors 77 (e.g., an outlet) of a second cooling member 72-n may be coupled to another connector 104 (e.g., an inlet) of the battery 82-n to transfer heat from the battery 82-n to the atmosphere surrounding the batteries 82-n.

In some implementations, a plurality of the batteries 82-n are electrically coupled to one another in a series circuit arrangement. In some implementations, a plurality of the batteries 82-n are electrically coupled to one another in a parallel circuit arrangement. In some implementations, a first plurality of the batteries 82-n are electrically coupled to one another in a series circuit arrangement, and a second plurality of the batteries 82-n are electrically coupled to one another in a parallel circuit arrangement. For example, the first plurality of batteries 82-n may be electrically coupled to one another in a series circuit arrangement, and electrically coupled to one or more other batteries 82-n in a parallel circuit arrangement.

The frame assembly 12 and the power supply assemblies 18 can help to provide a strong, durable system for supporting one or more batteries 82-n during operation of the vehicle 10 and to ensure an efficient, durable system for providing electricity to the motor 16 or other component of the vehicle 10. The incorporation of more than one power supply assembly 18, as illustrated in FIG. 1, can allow the system to satisfy various electrical energy requirements of multiple vehicles 10 and/or customers. In particular, the vehicle 10 can be customized to include a quantity of power supply assemblies 18 that is satisfactory for the unique electrical energy requirements of the vehicle 10.

The foregoing description has been provided for purposes of illustration and description. It is not intended to be exhaustive or to limit the invention. Individual elements or features of a particular configuration are generally not limited to that particular configuration, but, where applicable, are interchangeable and can be used in a selected configuration, even if not specifically shown or described. The same may also be varied in many ways. Such variations are not to be regarded as a departure from the invention, and all such modifications are intended to be included within the scope of the invention, that is defined and limited only by the appended claims.

## Claims

1. A system comprising:
a power supply assembly (18) comprising:
a tray (78) including a plurality of walls (84, 86, 88, 90, 92) defining a first void (94), a first wall of the plurality of walls including a flange (98) extending toward a second wall of the plurality of walls;
at least one insulation member (80-n) disposed within the first void; and
a battery (82-n) including a first portion disposed within the first void and a second portion extending from the first void such that the at least one insulation member surrounds the first portion of the battery;
the system further comprising a vehicle frame assembly (12) coupled to the power supply assembly, the vehicle frame assembly comprising:
a plurality of members (26, 28, 30, 32) defining a second void (34);
a plurality of cooling conduits (72-n) comprising a first cooling conduit and a second cooling conduit extending between at least two members of the plurality of members, wherein the cooling conduit is coupled to the at least one battery to transfer heat from the at least one battery; and
a plurality of busbars (74-n) comprising a first busbar (72-1) and a second busbar (72-2) extending between at least two members of the plurality of members, wherein the first and second busbars are coupled to the at least one battery to transfer electricity from the at least one battery,
wherein the battery includes:
first and second electrical connectors (102), wherein the first electrical connector is a positive terminal which is connected to the first busbar (72-1) and the second electrical connector is a negative terminal which is connected to the second busbar (72-2); and
first and second fluid connectors (104), wherein the first fluid connector is an inlet which is connected to the first cooling conduit and the second fluid connector is an outlet which is connected to the second cooling conduit.

2. The system of claim 1, wherein the at least one insulation member (80-n) defines a third void (103) within the first void (94).

3. The system of claim 1, wherein a first wall of the plurality of walls includes a flange (98), wherein the flange (98) extends into the first void (94).

4. The system of claim 3, wherein the at least one insulation member (80-n) is disposed between the flange (98) and the first wall of the tray (78).

5. The system of claim 1, wherein the plurality of walls (84, 86, 88, 90, 92) surround at least a portion of the first portion of the battery (82-n).

## Patentansprüche

1. , System, umfassend:
eine Stromversorgungsanordnung (18), umfassend:
eine Schale (78) mit einer Vielzahl von Wänden (84, 86, 88, 90, 92), die einen ersten Hohlraum (94) definieren, wobei eine erste Wand der Vielzahl von Wänden einen Flansch (98) aufweist, der sich in Richtung einer zweiten Wand der Vielzahl von Wänden erstreckt;
mindestens ein Isolationselement (80-n), das innerhalb des ersten Hohlraums angeordnet ist; und
eine Batterie (82-n) mit einem ersten Abschnitt, der innerhalb des ersten Hohlraums angeordnet ist, und einem zweiten Abschnitt, der sich aus dem ersten Hohlraum heraus erstreckt, so dass das mindestens eine Isolationselement den ersten Abschnitt der Batterie umgibt;
wobei das System ferner eine mit der Stromversorgungsanordnung verbundene Fahrzeugrahmenanordnung (12) umfasst, wobei die Fahrzeugrahmenanordnung Folgendes umfasst:
eine Vielzahl von Elementen (26, 28, 30, 32), die einen zweiten Hohlraum (34) definieren;
eine Vielzahl von Kühlleitungen (72-n), die eine erste Kühlleitung und eine zweite Kühlleitung umfassen, die sich zwischen mindestens zwei Elementen der Vielzahl von Elementen erstrecken, wobei die Kühlleitung mit der mindestens einen Batterie verbunden ist, um Wärme von der mindestens einen Batterie abzuführen; und
eine Vielzahl von Stromschienen (74-n), die eine erste Stromschiene (74-1) und eine zweite Stromschiene (74-2) umfassen, die sich zwischen mindestens zwei Elementen der Vielzahl von Elementen erstrecken, wobei die erste und die zweite Stromschiene mit der mindestens einen Batterie verbunden sind, um Strom von der mindestens einen Batterie zu übertragen,
wobei die Batterie Folgendes umfasst:
einen ersten und einen zweiten elektrischen Anschluss (102), wobei der erste elektrische Anschluss ein Pluspol ist, der mit der ersten Stromschiene (74-1) verbunden ist, und der zweite elektrische Anschluss ein Minuspol ist, der mit der zweiten Stromschiene (74-2) verbunden ist; und
einen ersten und einen zweiten Fluidanschluss (104), wobei der erste Fluidanschluss ein Einlass ist, der mit der ersten Kühlleitung verbunden ist, und der zweite Fluidanschluss ein Auslass ist, der mit der zweiten Kühlleitung verbunden ist.

2. . System nach Anspruch 1, wobei das mindestens eine Isolationselement (80-n) einen dritten Hohlraum (103) innerhalb des ersten Hohlraums (94) definiert.

3. . System nach Anspruch 1, wobei eine erste Wand der Vielzahl von Wänden einen Flansch (98) aufweist, wobei sich der Flansch (98) in den ersten Hohlraum (94) hinein erstreckt.

4. . System nach Anspruch 3, wobei das mindestens eine Isolationselement (80-n) zwischen dem Flansch (98) und der ersten Wand der Schale (78) angeordnet ist.

5. . System nach Anspruch 1, wobei die Vielzahl von Wänden (84, 86, 88, 90, 92) zumindest einen Teil des ersten Abschnitts der Batterie (82-n) umschließen.

## Revendications

1. Système comprenant:
un ensemble d'alimentation électrique (18) comprenant:
un chemin de câble (78) comportant une pluralité de parois (84, 86, 88, 90, 92) définissant un premier vide (94), une première paroi parmi ladite pluralité de parois comportant une bride (98) s'étendant vers une deuxième paroi parmi ladite pluralité de parois;
au moins un élément isolant (80-n) disposé à l'intérieur du premier vide; et
une batterie (82-n) comportant une première partie disposée à l'intérieur du premier vide et une seconde partie s'étendant à partir du premier vide de telle sorte que ledit au moins un élément isolant entoure la première partie de la batterie;
le système comprenant en outre un ensemble cadre de véhicule (12) couplé à l'ensemble d'alimentation électrique, l'ensemble cadre de véhicule comprenant:
une pluralité d'éléments (26, 28, 30, 32) définissant un deuxième vide;
une pluralité de circuits de refroidissement (72-n) comprenant un premier conduit de refroidissement et un deuxième conduit de refroidissement s'étendant entre au moins deux éléments de la pluralité d'éléments, le conduit de refroidissement étant couplé à ladite au moins une batterie pour transférer de la chaleur provenant de ladite au moins une batterie; et
une pluralité de barres omnibus (74-n) comprenant une première barre omnibus (74-1) et une deuxième barre omnibus (74-2) s'étendant entre au moins deux éléments de ladite pluralité d'éléments, les première et deuxième barres omnibus étant couplées à ladite au moins une batterie pour transférer de l'électricité depuis ladite au moins une batterie,
la batterie comprenant:
des premier et deuxième connecteurs électriques (102), le premier connecteur électrique étant une borne positive reliée à la première barre omnibus (74-1) et le deuxième connecteur électrique étant une borne négative reliée à la deuxième barre omnibus (74-2); et
des premier et deuxième connecteurs de fluide (104), le premier connecteur de fluide étant une entrée reliée au premier circuit de refroidissement et le deuxième connecteur de fluide étant une sortie reliée au deuxième conduit de refroidissement.

2. Système selon la revendication 1, dans lequel ladite au moins un élément isolant (80-n) définit un troisième vide (103) à l'intérieur du premier vide (94).

3. Système selon la revendication 1, dans lequel une première paroi parmi la pluralité de parois comprend une bride (98), ladite bride (98) s'étendant dans le premier vide (94).

4. Système selon la revendication 3, dans lequel ladite au moins un élément isolant (80-n) est disposé entre la bride (98) et la première paroi du chemin de câble (78).

5. Système selon la revendication 1, dans lequel la pluralité de parois (84, 86, 88, 90, 92) entoure au moins une partie de la première partie de la batterie (82-n).
